# EUROPÄISCHE PATENTANMELDUNG

(11) **EP 1 398 259 A2**
(43) Veröffentlichungstag der Anmeldung: **17.03.2004**
(21) Anmeldenummer: 03020052.1
(22) Anmeldetag: 04.09.2003
(51) Int. Cl.: B62K 23/06

(54) **Betätigungsarmatur**

(30) Priorität: 12.09.2002 DE 10242328
(71) Anmelder: Spiegler Bremstechnik GmbH, 79117 Freiburg (DE)
(72) Erfinder: Spiegler, Lothar, 79183 Waldkirch (DE)
(74) Vertreter: Maucher, Wolfgang, Dipl.-Ing.

(57) **Zusammenfassung**

w Eine Betätigungsarmatur (1), insbesondere Brems- und/oder Kupplungsarmatur, weist einen um ein Schwenkgelenk (5) schwenkbar gelagerten Handhebel (6) auf, der über eine Betätigungsverbindung (7) mit einer Funktionseinheit verbunden ist. Der Handhebel (6) weist in Längserstreckungsrichtung einen äußeren Handhebel-Abschnitt (8a) und einen sich über ein Zwischengelenk (9) anschließenden inneren Handhebel-Abschnitt (8b) auf, wobei das Zwischengelenk (9) für ein Verschwenken und Ausweichen des äußeren Handhebel-Abschnitts (8a) aus der Gebrauchsstellung des Handhebels (6) entgegen der Handhebel-Betätigungsrichtung (Pf1) bei Überlastung in Ausweichrichtung (Pf2) ausgebildet ist. Zwischen dem äußeren und dem inneren Handhebel-Abschnitt (8a, 8b) ist ein in Handhebel-Betätigungsrichtung (Pf1) wirksamer, den Handhebel (6) in Gebrauchsstellung haltender Handhebel-Anschlag vorgesehen (Figur 1).

## Beschreibung

Die Erfindung bezieht sich auf eine Betätigungsarmatur, insbesondere Brems- und/oder Kupplungsarmatur, mit einem um ein Schwenkgelenk schwenkbar gelagerten Handhebel.

Derartige Armaturen werden insbesondere an Motorrädern als am Lenker befestigte Handbetätigungselemente zum Bremsen beziehungsweise Kuppeln verwendet. Denkbar sind auch andere Anwendungen, beispielsweise als Gashebel.
Nachteilig bei den vorbekannten Betätigungsarmaturen ist jedoch, dass diese beispielsweise bei einem Sturz beschädigt werden können, wobei Beschädigungen am Handhebel selbst, aber auch an der Funktionseinheit, die beispielsweise durch einen Hydraulikzylinder mit Kolben und Kolbenstange gebildet sein kann, auftreten können, die ein Austauschen der kompletten, teuren Armatur erforderlich machen.

Es besteht daher insbesondere die Aufgabe, eine Betätigungsarmatur der eingangs genannten Art zu schaffen, bei der Beschädigungen weitgehend vermieden oder zumindest kostengünstig repariert werden können.

Die erfindungsgemäße Lösung dieser Aufgabe besteht insbesondere darin, dass der Handhebel in Längserstreckungsrichtung einen äußeren Handhebel-Abschnitt und einen sich über ein Zwischengelenk anschließenden inneren Handhebel-Abschnitt aufweist, dass das Zwischengelenk für ein Verschwenken und Ausweichen des äußeren Handhebel-Abschnitts aus der Gebrauchsstellung des Handhebels entgegen der Handhebel-Betätigungsrichtung bei Überlastung in Ausweichrichtung ausgebildet ist, und dass zwischen dem äußeren und dem inneren Handhebel-Abschnitt ein in Handhebel-Betätigungsrichtung wirksamer, den Handhebel in Gebrauchsstellung haltender Handhebel-Anschlag vorgesehen ist.

Dadurch kann der Handhebel bei Überlastung entgegen der Betätigungsrichtung, beispielsweise bei einem Sturz, an dem Zwischengelenk ausweichen, so dass praktisch keine Kräfte auf den inneren Handhebel-Abschnitt übertragen werden. Da diese Kräfte somit auch nicht auf andere Bauteile uns insbesondere auf eine in die Armatur integrierte Funktionseinheit übertragen werden, wird eine Beschädigung in diesem Bereich vermieden. Durch das Schwenkgelenk kann auch ein Bruch des Handhebels selbst vermieden werden.

Die Funktionalität des Handhebels ist durch den Handhebel-Anschlag sichergestellt, durch den ein Verschwenken des Zwischengelenks in Betätigungsrichtung über die Gebrauchsstellung hinaus unterbunden ist, so dass beim Verschwenken des Handhebels in Betätigungsrichtung die Funktionseinheit betätigt und der Brems-, Kupplungs- oder dergleichen Vorgang ausgelöst wird.

Bei einer Funktionseinheit mit einem insbesondere hydraulischen Betätigungszylinder mit darin geführtem Kolben und Kolbenstange kann somit eine Beschädigung der teuren hydraulischen Einheit, beispielsweise durch Bruch oder Verbiegen der Kolbenstange, vermieden werden.

Dabei ist es zweckmäßig, wenn im Bereich des Zwischengelenks ein Rückstellelement, insbesondere eine Rückstell-Feder vorgesehen ist, die den äußeren Handhebel-Abschnitt in Gebrauchsstellung zu dem Handhebel-Anschlag beaufschlagt. Dadurch ist ein versehentliches Ausschwenken des äußeren Handhebels vermieden und folglich ist sichergestellt, dass der äußere Handhebel-Abschnitt stets in Gebrauchsstellung gehalten ist und dem Fahrer zum Bremsen, Kuppeln oder dergleichen Betätigungsvorgang zur Verfügung steht.

Es ist vorteilhaft, wenn im Verbindungsbereich des äußeren und des inneren Handhebel-Abschnitts eine Rastverbindung für die beiden Handhebel-Abschnitte vorgesehen ist, die in Gebrauchsstellung des Handhebels einrastet und bei Überlastung des äußeren Handhebel-Abschnitts in Ausweichrichtung ausrastbar ist und wenn vorzugsweise die Rastverbindung gleichzeitig den Handhebel-Anschlag bildet. Durch die Rastverbindung wird einem versehentlichen Verschwenken des äußeren Handhebel-Abschnitts entgegen der Betätigungsrichtung zusätzlich entgegengewirkt, da zunächst eine bestimmte Initial-Kraft aufgebracht werden muss, um die Rastverbindung ausrasten zu lassen. Trotzdem ist bei stärkeren, beispielsweise bei einem Sturz auftretenden Krafteinwirkungen, ein Ausweichen des äußeren Handhebel-Abschnitts entgegen der Betätigungsrichtung sichergestellt.

Eine Ausführungsform der erfindungsgemäßen Betätigungsarmatur, für die eigenständiger Schutz beansprucht wird, sieht vor, dass bei einer Funktionseinheit, die einen insbesondere hydraulischen Betätigungszylinder mit einem darin geführten Kolben mit Kolbenstange aufweist, die Betätigungsverbindung zwischen dem inneren Handhebel-Abschnitt und der Kolbenstange als Trennverbindung ausgebildet ist zur Trennung von Kolben und Kolbenstange vom Handhebel bei Überlastung insbesondere des inneren Handhebel-Abschnitts in Ausweichrichtung.
Wenn auf den inneren Handhebel-Abschnitt Kräfte entgegen der Betätigungsrichtung einwirken, kann die Trennverbindung die Verbindung zur Kolbenstange lösen, so dass die Kolbenstange und der gesamte Betätigungszylinder vor Beschädigungen geschützt sind. Besonders vorteilhaft ist diese eigenständige Maßnahme in Verbindung mit einem Zwischengelenk zwischen einem äußeren und einem inneren Handhebel-Abschnitt gemäß Anspruch 1.

Zweckmäßig ist es, wenn die Kolbenstange im Bereich ihres freien Endes als Teil der Trennverbindung einen Querbolzen aufweist, und wenn der innere Handhebel-Abschnitt bei der Trennverbindung eine den Querbolzen für eine Zugverbindung etwa halbseitig umgreifende, in Zugrichtung offene, gegebenenfalls formschlüssige Bolzenaufnahme aufweist.

Eine weitere Ausgestaltungsform der erfindungsgemäßen Betätigungsarmatur, für die ebenfalls eigenständiger Schutz beansprucht wird, sieht vor, dass eine das Handhebel-Schwenkgelenk tragende Handhebel-Halterung vorgesehen ist, die an einem Drehlager der Funktionseinheit drehbar gelagert ist und andererseits kraftschlüssig an dem Drehlager festlegbar ist, wobei die kraftschlüssige Verbindung der Handhebel-Halterung und des Drehlagers bei Überlastung in Drehrichtung lösbar ist.
Dadurch kann der Handhebel bei starker Krafteinwirkung quer zur Betätigungsrichtung und quer zur Handhebel-Längsrichtung durch eine Drehbewegung ausweichen und sich um eine Drehachse drehen, so dass keine oder nur geringe Kräfte auf die Betätigungsverbindung zwischen Handhebel und Funktionseinheit wirken und Beschädigungen in diesem Bereich vermieden werden können. Durch die kraftschlüssige Verbindung zwischen der Handhebel-Halterung und der Funktionseinheit ist trotzdem ein fester Halt beider Teile aneinander bei Normalbelastung sichergestellt.

Es ist vorteilhaft, wenn bei einer durch einen Betätigungszylinder mit einem darin geführten Kolben mit Kolbenstange gebildeten Funktionseinheit das Drehlager durch den Betätigungszylinder gebildet ist und wenn die das Handhebel-Schwenkgelenk tragende Handhebel-Halterung um eine durch die Kolbenstange verlaufende Drehachse drehbar an dem Betätigungszylinder gelagert ist.

Ein weiterer Vorteil der vorbeschriebenen drehbaren Lagerung des Handhebels an der Funktionseinheit beziehungsweise dem Betätigungszylinder besteht darin, dass der Handhebel beispielsweise relativ zum Handgriff des Lenkers eines Fahrzeuges justierbar ist und so auf die individuellen Fahrgewohnheiten eines Fahrers angepasst werden kann, was die Ergonomie und somit auch die Fahrsicherheit erhöhen kann.

Die drehbare Lagerung ermöglicht es darüber hinaus auch, die erfindungsgemäße Betätigungsarmatur wahlweise als Brems- oder als Kupplungsarmatur einzusetzen, das heißt wahlweise rechts oder links an einem Lenker anzubringen und den Handhebel durch Verdrehen entsprechend nach rechts oder links auszurichten. Da an dem Betätigungszylinder die zur Bremse oder zu der Kupplung führenden Hydraulikanschlüsse vorgesehen sind und diese in Gebrauchslage nach unten ausgerichtet sein müssen, während an der oberen Seite Anschlüsse für einen Vorratsbehälter vorgesehen sind, und diese Lagen für ein einwandfreies Funktionieren der Bremse beziehungsweise der Kupplung nicht umkehrbar sind, müssen bei herkömmlichen Betätigungsarmaturen jeweils zwei unterschiedliche Armaturen für Rechts- und für Links-Montage vorgesehen werden. Bei der erfindungsgemäßen Armatur ist nur eine Variante erforderlich, die dann durch Verdrehen der Handhebel-Halterung an die jeweilige Montageposition angepasst werden kann. Dadurch können sowohl die Produktion als auch die Lagerhaltung vereinfacht werden.

Die Drehverbindung kann konstruktiv besonders einfach realisiert werden, wenn die Handhebel-Halterung die Funktionseinheit beziehungsweise den Betätigungszylinder schellenartig umgreift und wenn dort eine in Längsrichtung des Betätigungszylinders wirksame Verschiebesicherung vorzugsweise in Form einer am Betätigungszylinder außenseitig umlaufenden Nut und einem sich gegebenenfalls nur über einen Teilumfangsbereich erstreckenden, in die Nut eingreifenden, vorzugsweise als Ring ausgebildeten Vorsprung an der Handhebel-Halterung vorgesehen ist. Trotz der einfachen Konstruktion besteht zwischen dem Betätigungszylinder oder dergleichen und der Handhebel-Lagerung eine sichere und spielfreie Verbindung, wodurch eine sichere und präzise Bedienbarkeit der Betätigungsarmatur gewährleistet ist.

Das Verstellen des Handhebels auf Rechts- beziehungsweise Linkslage sowie das Justieren auf die individuelle Griffposition kann besonders einfach erfolgen, wenn die Handhebel-Halterung eine einseitig offene Schelle zum Verbinden mit dem Betätigungszylinder oder dergleichen aufweist, deren freie Enden mittels einer Spannschraube verbunden sind und wenn die beiden Schellenenden in Befestigungsstellung vorzugsweise dicht aneinander liegen. Zum Verstellen der Handhebel-Lage wird die Spannschraube geöffnet, und bei angezogener Spannschraube besteht eine kraftschlüssige Verbindung zwischen der Handhebel-Halterung und dem Betätigungszylinder oder dergleichen.

Besonders zweckmäßig ist es, wenn der schellenartige, die Funktionseinheit beziehungsweise den Betätigungszylinder ringförmig umgreifende Kupplungsbereich derart dimensioniert ist, dass bei aneinander liegenden Schellenenden eine optimale reib- oder kraftschlüssige Klemmverbindung zwischen der Handhebel-Lagerung und dem Betätigungszylinder besteht. Dadurch ist bei aneinanderliegenden Schellenenden automatisch die korrekte, zum Verdrehen der Handhebel-Lagerung erforderliche Kraft bei Überlastung eingestellt, so dass die Handhebel-Halterung auf einfache Weise und ohne besondere Werkzeuge oder Messgeräte festgelegt werden kann. Dies ist insbesondere zur individuellen Einstellung der Handhebel-Lage durch einen Motorradfahrer vorteilhaft, beispielsweise wenn ein Motorrad von verschiedenen Personen genutzt und die Handhebel-Lage daher häufig verstellt wird.

Eine weitere Ausgestaltung der erfindungsgemäßen Betätigungsarmatur sieht vor, dass das freie Ende des Handhebels durch ein lösbar mit dem übrigen Handhebel verbindbares Endstück aus insbesondere elastischem Material gebildet ist. Das freie Ende des Handhebels, das bei Stürzen besonders belastet wird, ist dadurch zusätzlich geschützt. Bei größeren Beschädigungen des Endstücks kann dieses vom übrigen Handhebel getrennt und ausgewechselt werden, was gegenüber dem Austauschen der gesamten Armatur erheblich kostengünstiger ist. Ein sturzbedingt an seinem Endstück verkratzter Handhebel kann durch Auswechseln dieses Endstückes somit mit geringem Aufwand in einen neuwertigen Zustand versetzt werden.

Um bei Stoßeinwirkung eine bessere Dämpfung zu erzielen, ist es zweckmäßig, wenn das Endstück im Bereich seines freien Endes ringförmig ausgebildet ist.

Um die wirksamen Hebelarmlängen beziehungsweise die Hebelposition des Handhebels individuell einstellen zu können, die Ergonomie und infolgedessen die Fahrsicherheit zu verbessern und somit auch die Unfallgefahr und die damit verbundene Gefahr von Beschädigungen an der Betätigungsarmatur zu reduzieren, ist es vorteilhaft, wenn der innere Handhebel-Abschnitt eine Ausnehmung zum lösbaren Einsetzen eines das Achslager für die Schwenkgelenk-Achse bildenden, wenigstens eine Achslageröffnung aufweisenden Adapterstückes hat, wenn das Adapterstück wenigstens eine außermittige Achslageröffnung hat oder wenn mehrere auswechselbare Adapterstücke mit unterschiedlich angeordneten Achslageröffnungen vorgesehen sind.
Durch Auswechseln des Adapterstücks kann so auf einfache Weise die Position der Schwenkgelenk-Achse und infolgedessen das Hebelverhalten des Handhebels verändert werden. Wenn das Adapterstück eine außermittige Achslageröffnung aufweist, kann mit einem einzigen Adapterstück die Schwenkgelenk-Achse durch Einsetzen des Adapterstückes in um 180° gedrehter Lage an zwei verschiedenen Positionen angeordnet werden.

Eine Vielzahl von möglichen Achspositionen bei einem einzigen Adapterstück ergibt sich, wenn das Adapterstück spiegelsymmetrisch ausgebildet ist und zumindest zwei in Einsatzstellung etwa in Handhebel-Längsrichtung nebeneinander angeordnete, von der Spiegelachse unterschiedlich beabstandete Achslageröffnungen aufweist. Zum Variieren der Achsposition ist nur ein einziges Adapterstück notwendig und Wechsel-Adapterstücke, die bei Nichtbenutzung leicht verloren gehen könnten, sind nicht erforderlich.

Die vorbeschriebenen Merkmale können einzeln, aber auch in Kombination an einer erfindungsgemäßen Betätigungsarmatur vorgesehen sein, um so die Gefahr von Beschädigungen insgesamt weiter zu reduzieren.

Die erfindungsgemäße Betätigungsarmatur kann insbesondere an Motorrädern, aber auch an allen anderen Arten von Fahrzeugen eingesetzt werden, bei denen handhebelbetätigte Systeme vorgesehen sind, beispielsweise an Fahrrädern oder Behinderten-Fahrzeugen.

Ebenfalls denkbar ist die Anwendung der vorbeschriebenen Sicherungsmerkmale an Daumenbremsen, die als Ersatzbetätigung für Fußbremsen eingesetzt werden und anstatt oder zusätzlich zu der Fußbetätigung im Bereich des Lenkers vorgesehen sind.

Die vorbeschriebenen Sicherungsmerkmale können auch an Handbetätigungshebeln ohne Hydraulik, beispielsweise Fahrrad-Bremshebeln mit Bowdenzug eingesetzt werden.

Nachfolgend sind Ausführungsbeispiele einer erfindungsgemäßen Betätigungsarmatur anhand der Zeichnungen näher erläutert.

Es zeigt:
- Fig. 1: eine Schnittdarstellung einer erfindungsgemäßen Betätigungsarmatur,
- Fig. 2: eine Seitenansicht der Betätigungsarmatur gemäß Figur 1, und
- Fig. 3: eine perspektivische Ansicht einer erfindungsgemäßen Betätigungsarmatur.

Eine im ganzen mit 1 bezeichnete Betätigungsarmatur weist einen in einem Betätigungszylinder 2 geführten Kolben 3 mit Kolbenstange 4 sowie einen um ein Schwenkgelenk 5 schwenkbar gelagerten Handhebel 6 auf. Der Handhebel 6 ist über eine Betätigungsverbindung 7 mit der Kolbenstange 4 verbunden.
Beim Verschwenken des Handhebels 6 in Betätigungsrichtung (Pf1) wird die Kolbenstange 4 und damit der Kolben 3 im Betätigungszylinder 2 gemäß Pfeil Pf3 aus dem Betätigungszylinder 2 hinaus bewegt und beispielsweise eine, über eine nicht dargestellte Hydraulikleitung mit dem Betätigungszylinder verbundene hydraulische Bremse oder eine Kupplung ausgelöst.

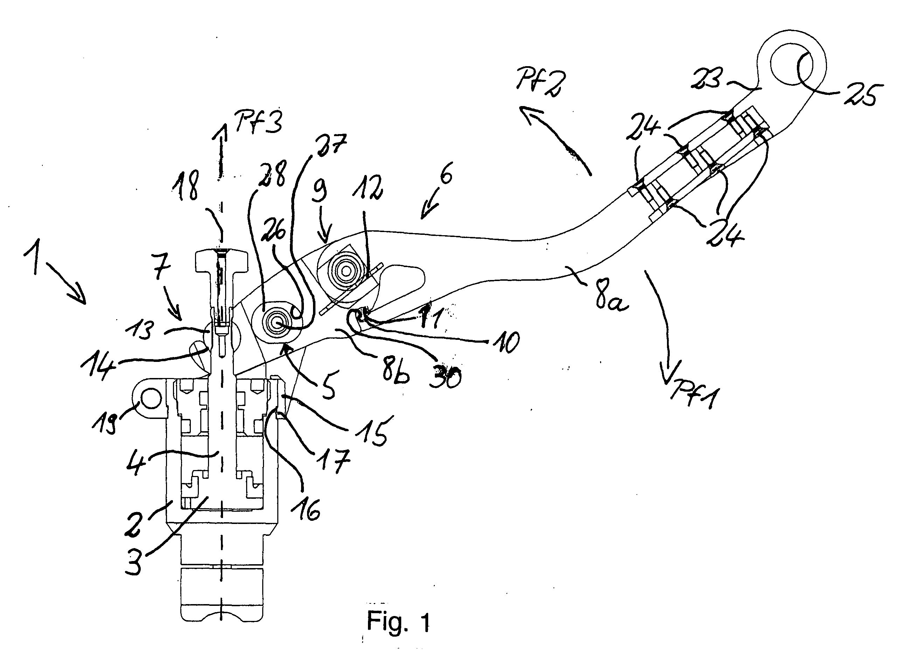

Der Handhebel 6 weist einen äußeren Handhebel-Abschnitt 8a und einen inneren Handhebel-Abschnitt 8b auf, die über ein Zwischengelenk 9 miteinander verbunden sind. Das Zwischengelenk 9 ermöglicht ein Verschwenken und Ausweichen des äußeren Handhebel-Abschnitts 8a aus der in Figur 1 dargestellten Gebrauchsstellung entgegen der Betätigungsrichtung (Pf1) in Ausweichrichtung (Pf2). Wenn beispielsweise bei einem Sturz entsprechend starke Kräfte auf den äußeren Handhebel-Abschnitt 8a in Ausweichrichtung Pf2 einwirken, kann dieser an dem Zwischengelenk 9 einschwenken und ausweichen, so dass diese Kräfte nicht auf den inneren Handhebel-Abschnitt 8b übertragen werden und somit nicht auf die Kolbenstange 4 wirken. Beschädigungen der Kolbenstange 4 oder des gesamten Betätigungszylinders 2 durch Überlastung des Handhebels 6 in Ausweichrichtung Pf2 können so vermieden werden.

Im Verbindungsbereich des äußeren Handhebel-Abschnitts 8a und des inneren Handhebel-Abschnitts 8b ist eine Rastverbindung für die beiden Handhebel-Abschnitte 8a, 8b vorgesehen. In Gebrauchsstellung rastet dabei ein Rastelement 10 des äußeren Handhebel-Abschnitts 8a in eine Rastaufnahme 11 des inneren Handhebel-Abschnitts 8b ein. In der in Figur 1 dargestellten Gebrauchsstellung bildet die Rastverbindung gleichzeitig einen Handhebel-Anschlag 30, der ein Verschwenken des äußeren Handhebel-Abschnitts 8a um das Zwischengelenk 9 in Betätigungsrichtung Pf1 über die Gebrauchsstellung hinaus verhindert und so eine sichere und zuverlässige Betätigbarkeit der Betätigungsarmatur 1 sicherstellt.
Die Rastverbindung bewirkt andererseits, dass eine bestimmte Initialkraft auf den äußeren Handhebel-Abschnitt 8a einwirken muss, bevor die Rastverbindung ausrastet und der äußere Handhebel-Abschnitt 8a um das Zwischengelenk 9 in Ausweichrichtung PF2 verschwenkt werden kann. Dadurch ist vermieden, dass der äußere Handhebel-Abschnitt 8a ungewollt schon bei kleinen Kraftbeaufschlagungen in Ausweichrichtung Pf2 verschwenkt wird.

Im Bereich des Zwischengelenks 9 ist eine Rückstell-Feder 12 als Rückstellelement für den äußeren Handhebel-Abschnitt 8a vorgesehen. Dadurch ist sichergestellt, dass auch bei einem Ausrasten des äußeren Handhebel-Abschnitts 8a eine Rückstellung soweit erfolgt, dass der Motorradfahrer oder dergleichen Bedienperson den äußeren Handhebel-Abschnitt 8a wieder zum Bremsen oder Kuppeln in Greifweite zur Verfügung hat. Gegebenenfalls muss nur noch eine leichte manuelle Hebelverstellung erfolgen, um das Rastelement 10 in die Rastaufnahme 11 einrasten zu lassen.

Die Betätigungsverbindung 7 zwischen dem inneren Handhebel-Abschnitt 8b und der Kolbenstange 4 ist als Trennverbindung ausgebildet. Dazu weisen die Kolbenstange 4 im Bereich ihres freien Endes einen Querbolzen 13 und der innere Handhebel-Abschnitt 8b eine Bolzenaufnahme 14 auf. Die Bolzenaufnahme 14 umgreift den Querbolzen 13 etwa halbseitig und ist in Zugrichtung (Pf3) offen ausgebildet. Dadurch ist einerseits das zuverlässige Betätigen der Kolbenstange 4 mit Kolben 3 in dem Betätigungszylinder 2 beim Verschwenken des Handhebels 6 in Betätigungsrichtung Pf1 sichergestellt. Andererseits kann bei großen Krafteinwirkungen auf den äußeren Handhebel-Abschnitt 8a, wenn dieser beispielsweise bei der in Figur 1 gezeigten Ausführungsform um mehr als 90° in Ausweichrichtung Pf2 um das Zwischengelenk 9 verschwenkt wird, oder wenn Kräfte in Ausweichrichtung direkt auf den inneren Handhebel-Abschnitt 8b wirken und der innere Handhebel-Abschnitt 8b um das Schwenkgelenk 5 in Ausweichrichtung Pf2 einschwenkt, die Bolzenaufnahme 14 sich vom Querbolzen 13 lösen. Somit ist vermieden, dass bei Verschwenken des inneren Handhebel-Abschnitts 8b aus der Gebrauchsstellung in Ausweichrichtung Pf2 die Kolbenstange 4 mitbewegt und in den Betätigungszylinder 2 gepresst wird, was zu Beschädigungen der Kolbenstange 4, des Kolbens 3 und/oder des gesamten Betätigungszylinders 2 führen könnte.

Gegebenenfalls kann die Bolzenaufnahme 14 den Querbolzen leicht rastend übergreifen, so dass ein versehentliches Lösen der Betätigungsverbindung 7 bei geringen Krafteinwirkungen vermieden ist.

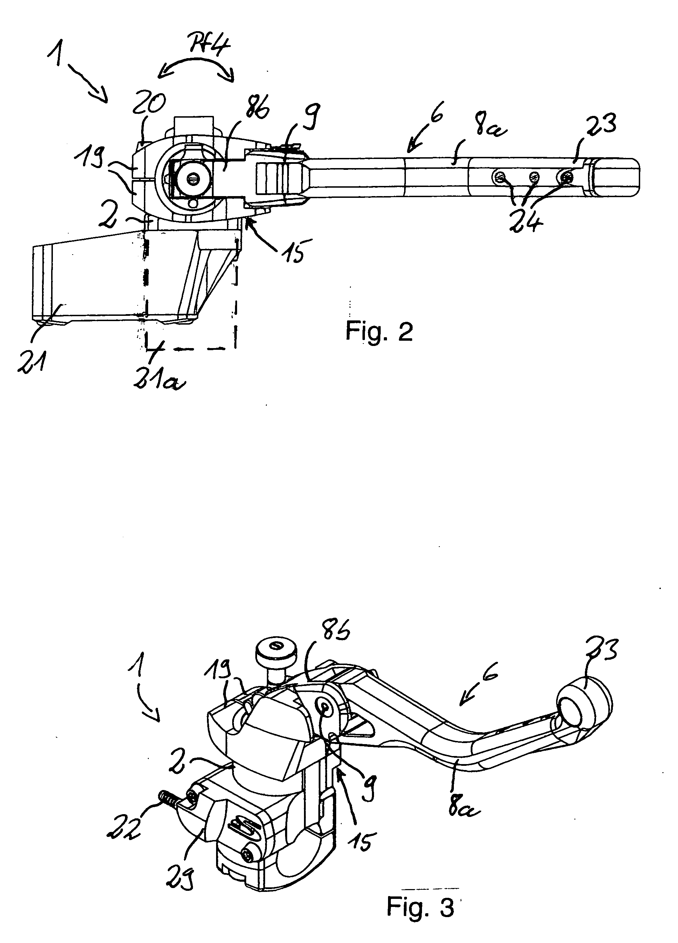

Der Handhebel 6 ist über eine das Handhebel-Schwenkgelenk 5 tragende Handhebel-Halterung 15 mit dem Betätigungszylinder 2 verbunden. Die Handhebel-Halterung 15 umgreift dazu den Betätigungszylinder 2 schellenartig, wobei an dem Betätigungszylinder 2 eine außenseitig umlaufende Nut 16 und an der Handhebel-Halterung 15 ein in die Nut 16 eingreifender, als Ring ausgebildeter Vorsprung 17 als Verschiebesicherung zur Verhinderung einer Relativbewegung zwischen Betätigungszylinder 2 und Handhebel-Halterung 15 in axialer Richtung vorgesehen sind.
Gleichzeitig ist dadurch die Handhebel-Halterung 15 um eine durch die Kolbenstange 4 verlaufende Drehachse 18 drehbar an dem Betätigungszylinder 2 gelagert. Durch Verbinden der freien Schellenenden 19 mit einer Spannschraube 20 (Figur 2) kann die Handhebel-Halterung 15 kraftschlüssig an dem Betätigungszylinder 2 festgelegt werden, wobei die kraftschlüssige Verbindung der Handhebel-Halterung 15 und des Betätigungszylinders 2 bei Überlastung in Drehrichtung (Pf4, Figur 2) lösbar ist. Somit ist einerseits ein sicheres Bedienen der Betätigungsarmatur 1 möglich, da die Handhebel-Halterung 15 kraftschlüssig an dem Betätigungszylinder 2 gehalten ist und bei Normalbelastung in einer definierten Position verbleibt. Andererseits ist ein Ausweichen der Handhebel-Halterung bei Überlastung in Drehrichtung Pf4 möglich, so dass ebenfalls Beschädigungen der Kolbenstange 4, des Kolbens 3 beziehungsweise des gesamten Betätigungszylinders 2 vermieden sind.

Zudem ist es durch die drehbare Lagerung der Handhebel- Halterung 15 an dem Betätigungszylinder 2 möglich, den Winkel zwischen Handhebel 6 und Lenker in Gebrauchslage einzustellen und an die individuellen Gewohnheiten des jeweiligen Nutzers anzupassen.
Darüber hinaus kann der Handhebel 6 mit der Handhebel-Halterung 15 um 180° gedreht werden, um die Betätigungsarmatur 1 wahlweise rechts oder links an einem Lenker anzuordnen. Da an dem Betätigungszylinder 2 nicht näher dargestellte Anschlüsse für die zur Bremse oder Kupplung führenden Hydraulikleitungen sowie ein Vorratsbehälter 21 für die Hydraulikflüssigkeit (Figur 2) vorgesehen sind, ist es nicht möglich, die gesamte Betätigungsarmatur 1 um 180° für eine Rechts- oder Linksmontage zu verdrehen, da dann die Lage der Anschlüsse beziehungsweise des Vorratsbehälters 21 ebenfalls vertauscht wäre, was die Funktion der Armatur 1 einschränken oder unmöglich machen könnte.
Durch die drehbare Lagerung der Handhebel-Halterung 15 kann diese mit dem Handhebel 6 für eine Rechts- oder Linksmontage verdreht werden, und die an dem Betätigungszylinder 2 vorgesehenen Anschlüsse sowie der Vorratsbehälter 21 bleiben in ihrer für ein einwandfreies Funktionieren der Betätigungsarmatur 1 vorgesehenen Lage.

In Figur 2 ist ein Vorratsbehälter 21 vorgesehen, der seitlich über den Betätigungszylinder 2 übersteht. In Montagelage ist die Betätigungsarmatur 1 entgegen der in Figur 2 gezeigten Lage so ausgerichtet, dass der Vorratsbehälter 21 oberhalb des Betätigungszylinders 2 angeordnet ist. Bei einer Montage einer solchen Armatur 1 auf einer Seite eines Lenkers und einer entsprechenden Armatur mit um 180° gedrehter Handhebel-Halterung 15 und Handhebel 6 auf der anderen Seite des Lenkers ergibt sich hinsichtlich des Vorratsbehälters 21 ein unsymmetrisches Erscheinungsbild. Es kann daher auch ein zylindrischer, in Figur 2 strichliniert angedeuteter Vorratsbehälter 21a vorgesehen sein, so dass sich bei Rechts- beziehungsweise Linksmontage ein symmetrisches Erscheinungsbild ergibt.

Figur 3 zeigt eine Betätigungsarmatur 1 ohne Vorratsbehälter, bei der stattdessen ein Anschlussnippel 22 für eine mit einem separaten Vorratsbehälter verbindbare Hydraulikleitung sowie eine Abdeckung 29, die beispielsweise ein Firmenlogo tragen kann, vorgesehen ist.

Wie insbesondere in Figur 1 zu erkennen ist, ist das freie Ende des Handhebels 6 durch ein lösbar mit dem übrigen Handhebel verbindbares Endstück 23 gebildet. Das Endstück ist gabel- oder hülsenartig auf das freie Ende des Handhebels 6 aufgesetzt und durch mehrere Schrauben 24 an dem Handhebel 6 arretiert. Das Endstück kann insbesondere aus elastischem Material, beispielsweise Kunststoff oder Gummi bestehen, um so bei leichteren Schlägen auf den Handhebel 6 diese abzudämpfen. Das Endstück 23 ist im Bereich seines freien Endes ringförmig mit einer Ausnehmung 25 ausgebildet. Dadurch kann eine hohe Dämpfungswirkung erzielt werden. Bei stärkeren Beschädigungen kann das Endstück 23 gegebenenfalls demontiert und ausgetauscht werden.

Der innere Handhebel-Abschnitt 8b weist gemäß Figur 1 eine Ausnehmung 26 zum lösbaren Einsetzen eines das Achslager für die Schwenkgelenk-Achse 27 bildenden Adapterstücks 28 auf. Außer dem in Figur 1 gezeigten Adapterstück 28 mit einer mittig angeordneten Achslageröffnung können weitere Adapterstücke mit außermittig angeordneten Achslageröffnungen vorgesehen sein, die wahl- oder wechselweise in die Ausnehmung 26 eingesetzt werden können, um so die wirksamen Hebelverhältnisse des Handhebels beim Bremsen oder Kuppeln verändern und individuell einstellen zu können. Da das Bereithalten mehrerer Adapterstücke 28 umständlich ist und die Adapterstücke aufgrund ihrer geringen Größe verloren gehen können, kann es zweckmäßig sein, ein Adapterstück vorzusehen, das entgegen der gezeigten Darstellung mehrere in Handhebel-Längsrichtung nebeneinander angeordnete Achslageröffnungen aufweist, so dass durch Einsetzen der Schwenkgelenk-Achse 27 in jeweils eine der Achslageröffnungen die wirksamen Hebelverhältnisse des Handhebels 6 beim Bremsen oder Kuppeln verändert und individuell eingestellt werden können. Ein Auswechseln des Adapterstückes 28 ist dann nicht erforderlich.

Es ist auch möglich, ein spiegelsymmetrisch ausgebildetes Adapterstück 28 vorzusehen, dass zumindest eine außermittige Achslageröffnung aufweist. Mit einem derartigen Adapterstück kann durch um 180° gedrehtes Einsetzen in die Ausnehmung 26 des inneren Handhebel-Abschnitts 8b zwischen zwei Achslager-Positionen gewechselt werden.

Durch die Veränderung der wirksamen Hebelverhältnisse für den Handhebel 6 und Anpassung auf die individuellen Bedürfnisse beispielsweise eines Motorrad-Fahrers wird die Ergonomie verbessert und damit die Fahrsicherheit erhöht, was Unfälle vermeiden kann und somit indirekt auch hilft, Beschädigungen an der Betätigungsarmatur 1 zu vermeiden.

## Patentansprüche

1. Betätigungsarmatur, insbesondere Brems- und/oder Kupplungsarmatur, mit einem um ein Schwenkgelenk (5) schwenkbar gelagerten Handhebel (6), **dadurch gekennzeichnet, dass** der Handhebel (6) in Längserstreckungsrichtung einen äußeren Handhebel-Abschnitt (8a) und einen sich über ein Zwischengelenk (9) anschließenden inneren Handhebel-Abschnitt (8b) aufweist, dass das Zwischengelenk (9) für ein Verschwenken und Ausweichen des äußeren Handhebel-Abschnitts (8a) aus der Gebrauchsstellung des Handhebels (6) entgegen der Handhebel-Betätigungsrichtung (Pf1) bei Überlastung in Ausweichrichtung (Pf2) ausgebildet ist, und dass zwischen dem äußeren und dem inneren Handhebel-Abschnitt (8a, 8b) ein in Handhebel-Betätigungsrichtung (Pf1) wirksamer, den Handhebel (6) in Gebrauchsstellung haltender Handhebel-Anschlag vorgesehen ist.

2. Betätigungsarmatur nach Anspruch 1, **dadurch gekennzeichnet, dass** der Handhebel über eine Betätigungsverbindung (7) mit einer Funktionseinheit verbunden ist, die einen insbesondere hydraulischen Betätigungszylinder mit einem darin geführten Kolben mit Kolbenstange aufweist.

3. Betätigungsarmatur nach Anspruch 1 oder 2, **dadurch gekennzeichnet, dass** im Bereich des Zwischengelenks (9) ein Rückstellelement, insbesondere eine Rückstell-Feder (12) vorgesehen ist, die den äußeren Handhebel-Abschnitt (8a) in Gebrauchsstellung zu dem Handhebel-Anschlag beaufschlagt.

4. Betätigungsarmatur nach einem der Ansprüche 1 bis 3, **dadurch gekennzeichnet, dass** im Verbindungsbereich des äußeren und des inneren Handhebel-Abschnitts (8a, 8b) eine Rastverbindung für die beiden Handhebel-Abschnitte (8a, 8b) vorgesehen ist, die in Gebrauchsstellung des Handhebels (6) einrastet und bei Überlastung des äußeren Handhebel-Abschnitts (8a) in Ausweichrichtung (Pf2) ausrastbar ist und dass vorzugsweise die Rastverbindung gleichzeitig den Handhebel-Anschlag bildet.

5. Betätigungsarmatur gemäß dem Oberbegriff von Anspruch 1, wobei die Funktionseinheit einen insbesondere hydraulischen Betätigungszylinder mit einem darin geführten Kolben mit Kolbenstange aufweist, **dadurch gekennzeichnet, dass** die Betätigungsverbindung (7) zwischen dem inneren Handhebel-Abschnitt (8b) und der Kolbenstange (4) als Trennverbindung ausgebildet ist zur Trennung von Kolben (3) und Kolbenstange (4) vom Handhebel (6) bei Überlastung insbesondere des inneren Handhebel-Abschnitts (8b) in Ausweichrichtung (Pf2).

6. Betätigungsarmatur nach Anspruch 5, **dadurch gekennzeichnet, dass** die Kolbenstange (4) im Bereich ihres freien Endes als Teil der Trennverbindung einen Querbolzen (13) aufweist, und dass der innere Handhebel-Abschnitt (8b) bei der Trennverbindung eine den Querbolzen (13) für eine Zugverbindung etwa halbseitig umgreifende, in Zugrichtung offene, gegebenenfalls formschlüssige Bolzenaufnahme (14) aufweist.

7. Betätigungsarmatur gemäß dem Oberbegriff von Anspruch 1, **dadurch gekennzeichnet, dass** eine das Handhebel-Schwenkgelenk (5) tragende Handhebel-Halterung (15) vorgesehen ist, die an einem Drehlager der Funktionseinheit drehbar gelagert ist und andererseits kraftschlüssig an dem Drehlager festlegbar ist, wobei die kraftschlüssige Verbindung der Handhebel-Halterung (15) und des Drehlagers bei Überlastung in Drehrichtung (Pf4) lösbar ist.

8. Betätigungsarmatur nach Anspruch 7, **dadurch gekennzeichnet, dass** bei einer durch einen Betätigungszylinder mit einem darin geführten Kolben mit Kolbenstange gebildeten Funktionseinheit das Drehlager durch den Betätigungszylinder gebildet ist und dass die das Handhebel-Schwenkgelenk (5) tragende Handhebel-Halterung (15) um eine durch die Kolbenstange (4) verlaufende Drehachse (18) drehbar an dem Betätigungszylinder (2) gelagert ist.

9. Betätigungsarmatur nach Anspruch 8, **dadurch gekennzeichnet, dass** die Handhebel-Halterung (15) den Betätigungszylinder (2) schellenartig umgreift und dass dort eine in Längsrichtung des Betätigungszylinders (2) wirksame Verschiebesicherung vorzugsweise in Form einer am Betätigungszylinder (2) außenseitig umlaufenden Nut (16) und einem sich gegebenenfalls nur über einen Teilumfangsbereich erstreckenden, in die Nut (16) eingreifenden, vorzugsweise als Ring ausgebildeten Vorsprung (17) an der Handhebel-Halterung (15) vorgesehen ist.

10. Betätigungsarmatur nach Anspruch 8 oder 9, **dadurch gekennzeichnet, dass** die Handhebel-Halterung (15) eine einseitig offene Schelle zum Verbinden mit dem Betätigungszylinder (2) aufweist, deren freie Enden (19) mittels einer Spannschraube (20) verbunden sind und dass die beiden Schellenenden (19) in Befestigungsstellung vorzugsweise dicht aneinander liegen.

11. Betätigungsarmatur nach einem der Ansprüche 8 bis 10, **dadurch gekennzeichnet, dass** der schellenartige, den Betätigungszylinder (2) ringförmig umgreifende Kupplungsbereich derart dimensioniert ist, dass bei aneinander liegenden Schellenenden (19) eine reibschlüssige Klemmverbindung zwischen der Handhebel-Halterung (15) und dem Betätigungszylinder (2) besteht.

12. Betätigungsarmatur nach einem der Ansprüche 1 bis 11, **dadurch gekennzeichnet, dass** das freie Ende des Handhebels durch ein lösbar mit dem übrigen Handhebel (6) verbindbares Endstück (23) aus insbesondere elastischem Material gebildet ist.

13. Betätigungsarmatur nach einem der Ansprüche 1 bis 12, **dadurch gekennzeichnet, dass** das Endstück (23) im Bereich seines freien Endes ringförmig ausgebildet ist.

14. Betätigungsarmatur nach einem der Ansprüche 1 bis 13, **dadurch gekennzeichnet, dass** der innere Handhebel-Abschnitt (8b) eine Ausnehmung (26) zum lösbaren Einsetzen eines das Achslager für die Schwenkgelenk-Achse (27) bildenden, wenigstens eine Achslageröffnung aufweisenden Adapterstückes (28) hat, dass das Adapterstück (28) wenigstens eine außermittige Achslageröffnung hat oder dass mehrere auswechselbare Adapterstücke (28) mit unterschiedlich angeordneten Achslageröffnungen vorgesehen sind.

15. Betätigungsarmatur nach einem der Ansprüche 1 bis 14, **dadurch gekennzeichnet, dass** das Adapterstück (28) spiegelsymmetrisch ausgebildet ist und zumindest zwei in Einsatzstellung etwa in Handhebel-Längsrichtung nebeneinander angeordnete, von der Spiegelachse unterschiedlich beabstandete Achslageröffnungen aufweist.
